# EUROPEAN PATENT SPECIFICATION

(11) **EP 3 554 746 B1**
(45) Date of publication and mention of the grant of the patent: **04.11.2026**
(21) Application number: 17829290.0
(22) Date of filing: 13.12.2017
(51) Int. Cl.: B22D 19/00, B22D 21/00, F02F 3/08

(54) **PISTON WITH COFUSED ALFIN RING AND PROCESS TO OBTAIN IT**
KOLBEN MIT CO-VERSCHMOLZENEM ALFINRING UND VERFAHREN ZU HERSTELLUNG DAVON
PISTON À BAGUE ALFIN CO-FONDUE ET SON PROCÉDÉ D'OBTENTION

(30) Priority: 14.12.2016 IT 201600126019
(43) Date of publication of application: 23.10.2019
(73) Proprietor: Asso Werke S.p.A., 56012 Calcinaia (PI) (IT)
(72) Inventor: ANGUILLESI, Dimitri, 56010 San Giovanni Alla Vena (Pisa) (IT)
(74) Representative: Leotta, Antonio
(86) International application number: PCT/IB2017/057892
(87) International publication number: WO 2018/109685

(56) References cited:
- EP-A1- 0 005 910
- US-A- 2 544 671
- US-A- 4 365 399
- US-A- 6 127 046
- US-A1- 2001 010 242
- US-A1- 2008 245 335
- US-A1- 2016 175 927
- US-B1- 6 484 790
- SRECKO MANASIJEVIC ET AL: "An Analysis of Intermetallic Bonding between a Ring Carrier and an Aluminum Piston Alloy", METALLURGICAL AND MATERIALS TRANSACTIONS A: PHYSICAL METALLURGY & MATERIALS SCIENCE., vol. 45, no. 10, 21 June 2014 (2014-06-21), US, pages 4580 - 4587, XP055406642, ISSN: 1073-5623, DOI: 10.1007/s11661-014-2415-x
- SRECKO MANASIJEVIC ET AL: "The intermetallic bonding between a ring carrier and aluminum piston alloy", REVISTA DE METALURGIA, vol. 51, no. 3, 22 September 2015 (2015-09-22), ES, pages e048, XP055405749, ISSN: 0034-8570, DOI: 10.3989/revmetalm.048

## Description

The present invention relates to a process the production of a piston made of a hypereutectic alloy with a cofused cast iron Alfin ring and a piston obtained through said process. The process according to the invention allows to obtain high adhesion of the Alfin ring to the piston body, making it particularly suitable for use in high performance engines.

### State of the art

The pistons used in 2- or 4-stroke engines are generally made with die cast aluminium alloys prevalently containing Al and Si and variable amounts of further alloying elements, such as Cu, for example. This material has an excellent balance between the physical/mechanical characteristics for realising pistons for high performance engines, by combining high resistance both to high temperatures and to sudden temperature variations, with high resistance to wear and corrosion. Modern internal combustion engines, both diesel and petrol, two- or four-stroke, increasingly frequently have extremely high operating pressures and temperatures, which subject the piston, in particular the piston head, to increasingly extreme thermal and mechanical stresses.

To increase the useful lifetime of the piston and of the engine, it has now been common practice in the sector for many years to insert a cast iron ring into the piston which is cofused with the piston itself, known as an "Alfin ring" or "Ring Carrier", normally made of Ni-Resist cast iron with high nickel and chromium contents.

Inside the ring, the housing of the elastic segment is afforded through mechanical processing, so that during operation the pressure of the gas acting on the segment is not discharged on the piston, but is discharged against the cast iron surface of the Alfin ring.

It is known that the cast iron surface is much more resistant to abrasion both with respect to the elastic segment, normally made of steel, and with respect to the aluminium alloy with which the piston is made.

Therefore, the insertion of an Alfin ring allows an improvement of the resistance of the segment/piston assembly to the high burst pressures to which the assembly is subjected.

Normally, Alfin rings are inserted inside the piston through a process in which the ring is positioned inside the piston mold and subsequently the molten aluminium alloy of the piston is poured into the mold. The most critical aspect of this process is managing to create optimal adhesion between the material of the ring, which is a ferrous alloy, and the nonferrous aluminium alloy of which the piston is made. To improve the adhesion between the ring and the piston it is known to soak the ring in an aluminium plating bath (also known as an "Alfin bath"), made of a molten aluminium alloy with a low silicon content.

The degree of adhesion between the aluminium alloy of which the piston is made and the ferrous alloy of the ring and its durability are more critical when the aluminium alloy that constitutes the piston is an alloy with a high silicon content, i.e. containing much higher percentages of silicon than the eutectic percentage.

Such alloys are generally used for making pistons for high performance engines, in particular for two-stroke engines, as they allow a vitreous layer to be obtained on the surface of the piston that significantly improves its resistance to wear with respect to pistons made with an alloy with about 12% silicon (eutectic alloy).

However, when the percentage of silicon in the master alloy is high, the vitreous layer that is formed on the surface of the piston does not allow the perfect adhesion of the master alloy to the Alfin ring, even if the compatibility of the materials is increased by the aluminium plating bath.

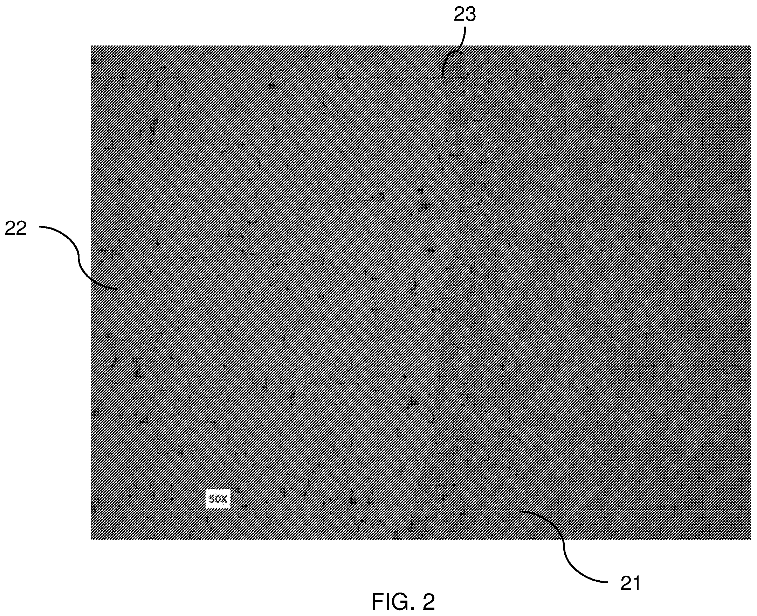

SRECKO MANASIJEVIC ET AL: "An Analysis of Intermetallic Bonding between a Ring Carrier and an Aluminum Piston Alloy", METALLURGICAL AND MATERIALS TRANSACTIONS A: PHYSICAL METALLURGY & MATERIALS SCIENCE., vol. 45, no. 10, 21 June 2014 (2014-06-21), pages 4580-4587, ISSN: 1073-5623, DOI: 10.1007/s11661-014-2415-x and SRECKO MANASIJEVIC ET AL: "The intermetallic bonding between a ring carrier and aluminum piston alloy", REVISTA DE METALURGIA, vol. 51, no. 3, 22 September 2015 (2015-09-22), page e048, ISSN: 0034-8570, DOI: 10.3989/revmetalm.048 disclose the results of an analysis of the formation of an intermetallic bond between a ring carrier and an aluminum piston alloy. The ring carrier is made of austenitic cast iron (Ni-Resist) to increase the wear resistance of the first ring groove and is applied in highly loaded diesel engines. Metallographic investigation using an optical microscope in combination with the SEM/EDS analysis of the quality of the intermetallic bonding layer was done. The microstructure of the alfin bond is shown in Figure 2(c). The alfin bonding process begins with the growth of an Al alloy intermetallic surface layer on the ring carrier by the immersion of the ring carrier into a molten Al alloy bath. The bath temperature is 1033 K ± 278 K (760°C ± 5°C).

US 4 365 399 A discloses a light weight composite piston for internal combustion engines comprising a forged aluminum piston body integrally joined to an iron crown insert ring and a method for making such composite pistons.

In this context, the main technical task of the present invention is to propose a process for producing a piston made of a hypereutectic alloy, comprising at least one Alfin ring or Ring Carrier made of cast iron, wherein the piston obtained or obtainable through said process has a high degree of adhesion between the body of the aluminium alloy piston and the at least one cast iron Alfin ring.

A further technical task of the present invention is to propose a piston made of a hypereutectic Al-Si alloy comprising at least one cast iron Alfin ring obtained or obtainable by said process.

### Summary of the invention

In a first aspect, the present invention relates to a process for producing a piston made of a hypereutectic Al-Si alloy comprising at least one Alfin ring, according to claim 1, the process comprising the steps of:
(i) providing at least one cast iron ring;
(ii) soaking said at least one cast iron ring in at least one aluminium plating bath comprising an Al-Si alloy comprising 8-12 wt. % of Si at the temperature of 650°-750°;
(iii) extracting the cast iron ring from the aluminium plating bath and inserting it in a casting die;
(iv) pouring a hypereutectic Al-Si alloy comprising 16-24 wt. % of Si into the die at a pouring temperature of 760°-900°C, obtaining a piston comprising at least one Alfin ring;
(v) cooling and extracting the piston from the die.

In a further aspect thereof, the present invention relates to a piston, according to claim 4, made of a hypereutectic Al-Si alloy comprising at least one Alfin ring made of Ni-resistant cast iron and obtained by the process as previously described, wherein the hypereutectic Al-Si alloy comprises about 16-24 wt. % of Si, preferably about 18-22 wt. %.

In a further aspect thereof, the present invention relates to a two- or four-stroke engine, according to claim 6, comprising the hypereutectic Al-Si alloy piston as described above.

### Brief description of the figures

Further advantages of the present invention will emerge more clearly from the following description, also with reference to the appended figures, wherein:

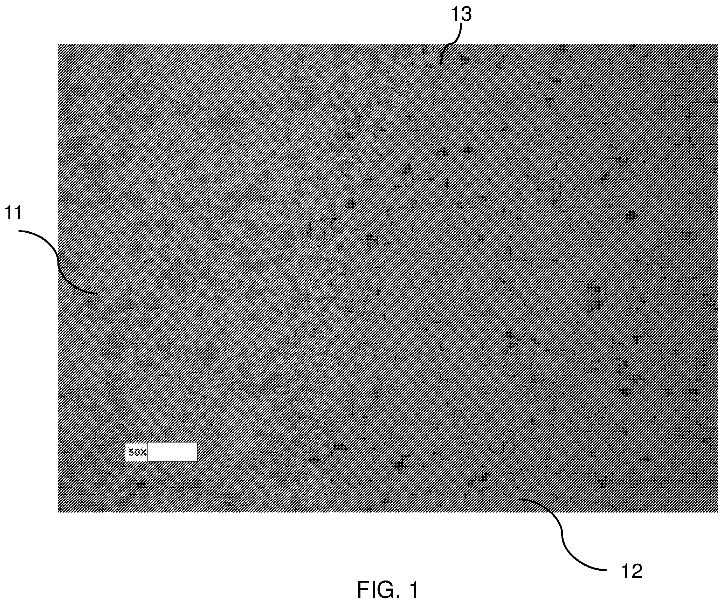

- Figure 1 and Figure 2 show the 50x optical microscope magnifications of a cross section taken at the adhesion surface between the body of a hypereutectic Al-Si alloy piston obtained by the process according to the invention and the Alfin ring cofused therein; and

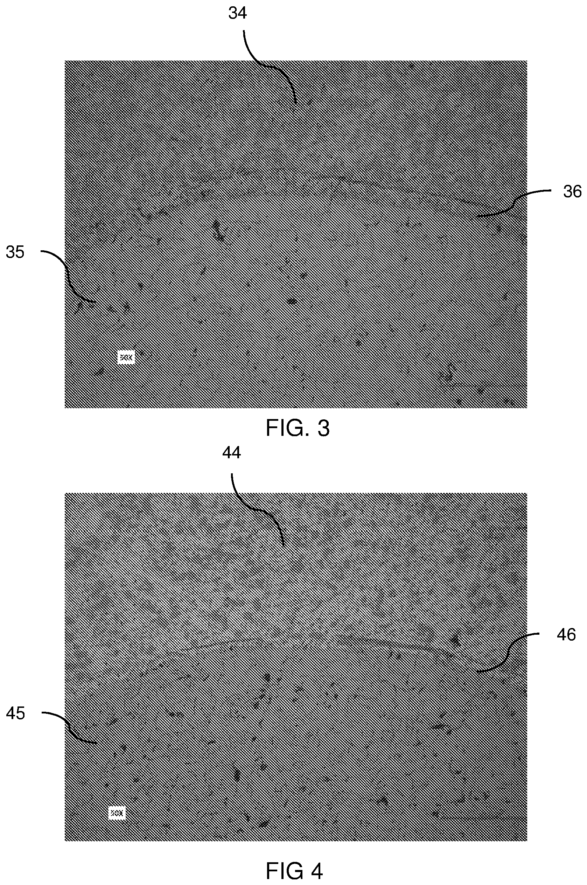

- Figure 3 and Figure 4 show the 50x optical microscope magnifications of a cross section taken at the adhesion surface between the body of different hypereutectic Al-Si alloy pistons and the Alfin ring cofused therein, wherein the pistons were obtained through processes in which steps (ii) and (iv) were performed at temperatures outside the intervals indicated above.

### Detailed description of the invention

In the present description and the appended claims, the percentages are considered to be expressed by weight, unless otherwise indicated.

The term "Al-Si" alloy relates in the present description and appended claims to a casting alloy comprising aluminium and silicon as the main alloying elements, in which the total percentage by weight of Al and Si is greater than 90%, preferably greater than 95 wt. %, of the alloy. Al-Si alloys may comprise variable percentages of further alloying elements and/or unavoidable impurities. In the present description and appended claims, Al-Si alloys that comprise about 10-12 wt. % of Si are defined as "eutectic Al-Si alloys"; Al-Si alloys that comprise about < 10 wt. % of Si are defined as "hypoeutectic Al-Si alloys". Al-Si alloys that comprise about > 12 wt. %, preferably ≥ about 13 wt. % of Si are defined as "hypereutectic Al-Si alloys".

The term "master alloy" relates in the present description and appended claims to the hypereutectic Al-Si alloy used for realising the body of the piston.

In the present description and appended claims, the terms "cast iron ring", "Alfin ring" and "Ring Carrier" are used as synonyms.

The term "austenitic cast iron" relates in the present description and appended claims to a cast iron with an iron, carbon and silicon based austenitic matrix comprising at least a further alloying element selected from nickel, manganese, copper, chromium and mixtures thereof and/or other unavoidable impurities.

In a first aspect, the present invention relates to a process for producing a piston made of a hypereutectic Al-Si alloy piston comprising at least one Alfin ring, that comprises the steps of:
(i) providing at least one cast iron ring;
(ii) soaking said at least one cast iron ring in at least one aluminium plating bath comprising an Al-Si alloy comprising 8-12 wt. % of Si, the aluminium plating bath being at the temperature of 650°-750°;
(iii) extracting the cast iron ring from the aluminium plating bath and inserting it in a casting die;
(iv) pouring a molten hypereutectic Al-Si alloy comprising 16-24 wt. % of Si into the die at a pouring temperature of 760-900°C, obtaining a piston comprising at least one Alfin ring;
(v) cooling and extracting the piston from the die.

Step (i) of the process according to the invention comprises providing at least one cast iron ring (also known as Alfin or Ring Carrier) of the type, shape and size normally used for producing pistons for two- or four-stroke engines, preferably for two- or four-stroke diesel engines.

It has been observed that the size of the cast iron ring, like its geometry, do not have any particular influence on the adhesion of the ring itself to the master alloy of the piston, as long as at least one cast iron ring is of the type normally used in the art as an Alfin ring.

The at least one cast iron ring may preferably comprise an austenitic cast iron of the "Ni-resist" type, i.e. an austenitic cast iron with a high nickel content characterised by high corrosion resistance, high oxidation resistance at high temperatures, high resistance to wear and erosion, and high tenacity.

The austenitic cast iron useful for the realisation of the ring of step (i) is a EN-GJLA-XNiCuCr15-6-2 cast iron as defined by standard EN 13835-2012 (or a JLA/XNi15Cu6Cr2 cast iron as defined by standard ISO 2892-2007), having the following composition by weight:

| | % |
|---|---|
| C | max. 3 |
| Si | 1.0 - 2.8 |
| Mn | 0.5 - 1.5 |
| Ni | 13.5 - 17.5 |
| P | max. 0.25 |
| Cr | 1.0 - 3.5 |
| Cu | 5.5 - 7.5 |
| Fe | up to 100% |

Optionally said austenitic cast iron may comprise further alloying elements such as unavoidable impurities.

According to one embodiment, the austenitic cast iron may have at least one, preferably all, of the following physical/mechanical characteristics:
- Brinell hardness: 110 - 180 HBW; and/or
- tensile strength: 130 - 210 N/mm²; and/or
- elastic modulus: 100,000 - 160,000 N/mm².

In step (ii) of the process, the at least one cast iron ring is soaked in an aluminium plating bath (also known as a refining bath) comprising an Al-Si alloy in which the alloy comprises about 8.0-12.0 wt. % of Si, preferably about 10.0-11.5 wt. %, more preferably about 10.0 wt. %, said aluminium plating bath being at the temperature of about 650°-750°C, preferably about 690°-730°C, more preferably about 690°-720°C.

According to one embodiment, the Al-Si alloy of the aluminium plating bath may further comprise iron and copper in a total concentration less than or equal to about 4 wt. %, preferably less than or equal to about 3 wt. %, more preferably less than or equal to about 1 wt. %. The presence of Fe of Cu at the concentrations indicated above allows better micro-structural anchorage of the cast iron ring to the master alloy of the piston and therefore better behaviour during the thermal expansion step of the piston/ring assembly under operating conditions.

According to one embodiment, the refining alloy may further comprise at least one alloying element selected from Mn, Mg, Zn, Ni, Cr and mixtures thereof, in an individual concentration less than or equal to about 0.5 wt. %. Other alloying elements different from those reported above may be present such as unavoidable impurities in overall amounts less than or equal to about 0.150 wt. %.

Step (ii) of the process may be performed under different pressure conditions, according to methods and processes known to a person skilled in the art; preferably the aluminium plating bath can be maintained at ambient pressure. Step (ii) may have a variable duration, comprised between 2 and 90 minutes according to the size of the Alfin ring.

At the end of the aluminium plating step, in step (iii) the at least one cast iron ring is extracted from the bath and inserted in a casting mold, which may be a permanent mold or a temporary (non-reusable) mold, having the desired geometry for realising the piston. Preferably, permanent dies may be used, normally used in the production of pistons for two- or four-stroke engines. The positioning of the at least one cast iron ring in the mold may take place manually by moving the ring with appropriate equipment or mechanically.

The hypereutectic Al-Si alloy of step (iv), also known as the master alloy, may comprise about 16-24 wt. % of Si, preferably about 18-22 wt. %, the remaining part being aluminium and optionally, but preferably, further alloying elements selected from Fe, Cu, Mn, Mg, Zn, Ti, Ni, P, Ca, Sr, Na and mixtures thereof, as well as unavoidable impurities. The pouring temperature of the master alloy (measured at ambient pressure) may be about 760°-900°C, preferably about 820°-870°C.

According to one embodiment, step (iv) may be performed by pouring a hypereutectic Al-Si alloy as described above into a permanent mold by gravity (i.e. at ambient pressure), at low pressure (20-100 kPa), under vacuum (pressure lower than 20 kPa) or by die casting using pressures greater than or equal to about 2 MPa, or higher.

According to one embodiment, during step (iv) of the process according to the invention a hypereutectic Al-Si alloy as described above may preferably be poured by gravity (at ambient pressure) into the chill, at a pouring temperature of about 760-900°C, preferably of about 820°-870°C.

According to the invention, the hypereutectic Al-Si alloy has the composition indicated in the following table:

| Element | wt. % |
|---|---|
| Si | 16-24, pref. 18-22 |
| Fe | ≤ 0.4 |
| Cu | 0.5 - 2.0 |
| Mn | ≤ 0.15 |
| Mg | ≤ 1.50 |
| Zn | ≤ 0.10 |
| Ti | ≤ 0.10 |
| Ni | 0.5 - 2.0 |
| P | ≤ 0.015 |
| other elements | < 0.05 each |
| | < 0.15 total |
| Al | up to 100% |

"Other elements" indicate further unavoidable elements such as impurities.

The pouring step (iv) can be performed in plants conventionally used for the industrial manufacturing of pistons.

The pouring step may have a variable duration according to the geometry of the piston and the composition of the master alloy and may be determined by a person skilled in the art based on his technical knowledge.

Then (step (v)), the piston comprising the at least one Alfin ring is cooled and separated from the mold.

The overall duration of steps (iv) and (v) may be indicatively but not exhaustively, comprised within the interval of 3-20 minutes, according to the dimensions of the piston and of the at least one Alfin ring. The duration of the (cooling) step (v) is generally longer than the duration of the (pouring) step (iv).

At the end of step (v) a rough (semi-processed) piston is obtained that normally requires further processing. Optionally, and preferably, the piston comprising the at least one Alfin ring may be subsequently subjected to further processing steps to obtain the finished piston, ready for installation on a two- or four-stroke engine.

There may be at least one further processing step, selected from:
(a) roughing: mechanical process that allows most of the excess material (sprue, burrs, etc.) to be removed from the piston;
(b) shot-blasting with abrasive material (e.g. corundum, grit from steel, ceramic, glass or other products normally used in the art);
(c) finishing and/or grinding: mechanical processing that allows the piston to be brought to the specified sizes and tolerances.

In a preferred embodiment all the steps (a)-(c) can be performed at the end of step (v).

As well as the mechanical treatments, chemical treatments may also be performed with acids or bases, according to methods known to a person skilled in the art, for the removal of undesired substances, possibly present on the surface of the piston.

The process according to the invention allows to obtain a piston made of a hypereutectic Al-Si alloy comprising at least one Alfin ring in which the at least one Alfin ring is cofused in the body of the piston itself, i.e. a piston with a high degree of adhesion between the body of the piston and the at least one Alfin ring.

Furthermore, the process according to the invention has an extremely high yield, since the pistons that have detachments of the surface of at least one ring greater than 4% with respect to the total contact surface between the ring and the body of the piston are less than or equal to about 30% (the detachment of the surface of the at least one ring may be measured through known ultrasound analysis methods).

Figure 1 and Figure 2 show the images under an optical microscope with a 50x magnification of a cross section taken at the Alfin ring, of hypereutectic Al-Si pistons obtained from the process according to the invention. It can be noted that the master alloy that constitutes the body of the piston (respectively (11) in Figure 1 and (21) in Figure 2) adheres with continuity to the Alfin ring (12), Figure 1, and (22), Figure 2. The layer comprised by the aluminium plating alloy (respectively (13) and (23) in Figures 1 and 2) is interposed between the master alloy and the Alfin ring. The adhesion surfaces do not have any discontinuity, both from a metallurgic point of view and a structural point of view: the metal continuity of the different alloys is clear, as is the absence of micro-cracks, discontinuities, pores, shrinkage cavities and other typical defects of cofusion technology that can compromise the physical/mechanical performance of the piston when under stress at high operating temperatures.

Figures 3 and 4 show some of the problems arising from the imperfect adhesion of the structure of the master alloy (34), Figure 3, and (44), Figure 4, of the piston towards the Alfin ring respectively (35) and (45) in Figure 3 and 4 in pistons obtained with different cofusion processes conducted at different temperatures with respect to those of steps (ii) and (iv) of the process according to the invention. Cracks and cavities in the master alloy of the piston and discontinuities in the layer comprised by the refining alloy are clearly visible (respectively (36) and (46) in Figure 3 and 4) which encapsulates the ring.

Further, the present invention relates to a hypereutectic Al-Si alloy piston comprising at least one Alfin ring obtained or obtainable by the process as previously described, wherein the hypereutectic Al-Si alloy comprises about 16-24 wt. % of Si, preferably about 18-22 wt. %.

According to the invention, the piston obtained or obtainable by the process according to the invention comprises a hypereutectic Al-Si master alloy having the following composition:

| Element | wt. % |
|---|---|
| Si | 16-24, pref. 18-22 |
| Fe | ≤ 0.4 |
| Cu | 0.5 - 2.0 |
| Mn | ≤ 0.15 |
| Mg | ≤ 1.50 |
| Zn | ≤ 0.10 |
| Ti | ≤ 0.10 |
| Ni | 0.5 - 2.0 |
| P | ≤ 0.015 |
| other elements | < 0.05 each |
| | < 0.15 total |
| Al | up to 100% |

"Other elements" indicate further unavoidable elements such as impurities. According to one embodiment, the piston obtained or obtainable by the process according to the invention may comprise at least one "Ni-resist" austenitic cast iron Alfin ring. to the invention, the piston obtained or obtainable by the process according to the invention comprises at least one "Ni-resist" austenitic cast iron Alfin ring, having the following composition

| | % |
|---|---|
| C | max. 3 |
| Si | 1.0 - 2.8 |
| Mn | 0.5 - 1.5 |
| Ni | 13.5 - 17.5 |
| P | max. 0.25 |
| Cr | 1.0 - 3.5 |
| Cu | 5.5 - 7.5 |
| Fe | up to 100% |

Optionally said austenitic cast iron may comprise further alloying elements such as unavoidable impurities.

According to one embodiment, the piston obtained or obtainable by the process according to the invention may comprise 1-3 Alfin rings as described above, preferably 1 Alfin ring.

Thanks to the high degree of adhesion between the at least one Alfin ring and the piston body, the piston obtained or obtainable by the process according to the invention is able to withstand high operating temperatures and pressures even for long periods without any detachment occurring of the at least one Alfin ring from the piston body. The even partial detachment of the ring from the body of the piston can cause very severe damage to the engine.

These characteristics make the piston obtained or obtainable by the process according to the invention particularly suitable for use in a high performance 2- or 4-stroke internal combustion engine, preferably in a 2- or 4-stroke diesel engine.

A further aspect of the present invention is therefore a two- or four-stroke engine comprising the hypereutectic Al-Si alloy piston as described above. Preferably said two- or four-stroke engine may be a diesel engine.

The invention is illustrated below by means of some non-limiting examples of embodiments.

### Example 1

For the production of a piston with a cofused Alfin ring an EN-GJLA-XNiCuCr15-6-2 (EN 13835) Ni-resist cast iron ring was used.

The ring was soaked in an aluminium plating bath at the temperature of about 700°C containing a 10 wt. % Al-Si alloy, further comprising Fe and Cu in a maximum total concentration of 1% as further alloying elements, as well as unavoidable metal impurities.

The ring was subsequently positioned inside the casting chill and a 21 wt. % of Si hypereutectic Al-Si alloy was poured into the mold by gravity.

The hypereutectic Al-Si master alloy had a pouring temperature of 854°C and contained Al and further alloying elements in a concentration comprised in the intervals indicated in the following table:

| Element | wt. % |
|---|---|
| Si | 16-24, pref. 18-22 |
| Fe | ≤ 0.4 |
| Cu | 0.5 - 2.0 |
| Mn | ≤ 0.15 |
| Mg | ≤ 1.50 |
| Zn | ≤ 0.10 |
| Ti | ≤ 0.10 |
| Ni | 0.5 - 2.0 |
| P | ≤ 0.015 |
| other elements | < 0.05 each |
| | < 0.15 total |
| Al | up to 100% |

The piston thus obtained was analysed under the optical microscope to verify the effective absence of adhesion defects between the master alloy and the Alfin ring. A cross section of the piston taken at the ring is shown in Figure 1.

### Example 2

For the production of a piston with a cofused Alfin ring, a cast iron ring was used as described in example 1. The ring was soaked in an aluminium plating bath at the temperature of about 700°C containing a 10 wt. % Al-Si alloy, further comprising Fe and Cu as further alloying elements in a maximum total concentration of 1% and further unavoidable metal impurities.

The ring was subsequently positioned inside the casting chill and a 24 wt. % of Si hypereutectic Al-Si alloy was poured into the mold by gravity. The hypereutectic Al-Si master alloy had a pouring temperature of 872°C and a composition as described in Example 1.

The piston thus obtained was analysed to verify the effective absence of adhesion defects between the master alloy and the Alfin ring. A cross section of the piston taken at the ring is shown in Figure 2.

## Claims

1. A process for the production of a piston made of a hypereutectic
Al-Si alloy having the following composition
| Element | wt.% |
|---|---|
| Si | 16-24, pref. 18-22 |
| Fe | ≤ 0.4 |
| Cu | 0.5 - 2.0 |
| Mn | < 0.15 |
| Mg | < 1.50 |
| Zn | < 0.10 |
| Ti | < 0.10 |
| Ni | 0.5 - 2.0 |
| P | < 0.015 |
| other elements | < 0.05 each |
| | < 0.15 total |
| Al | up to 100% |
and at least one Alfin ring made of Ni-resist cast iron having the following composition
| | % |
|---|---|
| C | max. 3 |
| Si | 1.0 - 2.8 |
| Mn | 0.5 - 1.5 |
| Ni | 13.5 - 17.5 |
| P | max. 0.25 |
| Cr | 1.0 - 3.5 |
| Cu | 5.5 - 7.5 |
| Fe | up to 100% |
said process comprising the steps of:
(i) providing at least one cast iron ring;
(ii) soaking said at least one cast iron ring in at least one aluminium plating bath comprising an Al-Si alloy comprising 8-12 wt.% of Si at the temperature of 650°-750°C, preferably at the temperature of 690°-730°C;
(iii) extracting the cast iron ring from the aluminium plating bath and inserting it in a casting mold;
(iv) pouring the hypereutectic Al-Si alloy into the mold, at a casting temperature of 760°-900°C, preferably 820°-870°C, thereby obtaining a piston comprising at least one Alfin ring;
(v) cooling and extracting the piston from the mold.

2. The process according to claim 1, wherein the aluminium plating bath comprises an Al-Si alloy comprising 8.0 - 12.0 wt.% of Si, preferably 10.0 - 1 1.5 wt.%, more preferably 10.0 wt.%.

3. The process according to any one of claims 1-2, wherein the aluminium plating bath comprises an Al-Si alloy comprising Fe and Cu as alloying elements in an overall amount ≤ 4 wt.%, preferably ≤ 3 wt.%, more preferably ≤ 1 wt.%.

4. A piston made of a hypereutectic Al-Si alloy comprising at least one Alfin ring made of Ni-resist cast iron having the following composition
| | % |
|---|---|
| C | max. 3 |
| Si | 1.0 - 2.8 |
| Mn | 0.5 - 1.5 |
| Ni | 13.5 - 17.5 |
| P | max. 0.25 |
| Cr | 1.0 - 3.5 |
| Cu | 6.5 - 7.5 |
| Fe | up to 100% |
obtained from the process according to any one of claims 1-3, wherein the hypereutectic Al-Si alloy comprises
| Element | wt.% |
|---|---|
| Si | 16-24, pref. 18-22 |
| Fe | ≤ 0.4 |
| Cu | 0.5 - 2.0 |
| Mn | < 0.15 |
| Mg | < 1.50 |
| Zn | < 0.10 |
| Ti | < 0.10 |
| Ni | 0.5 - 2.0 |
| P | < 0.015 |
| other elements | < 0.05 each |
| | < 0.15 total |
| Al | up to 100% |
and the pistons that have detachments of the surface of at least one ring greater than 4% with respect to the total contact surface between the ring and the body of the piston are less than or equal to about 30%, the detachment of the surface of the at least one ring being measured by an ultrasound analysis method.

5. The piston according to any one of claim 4, comprising 1-3 Alfin rings, preferably 1.

6. A two-stroke or four-stroke engine comprising at least one piston made of a hypereutectic Al-Si alloy according to any one of claims 4-5.

7. The two-stroke or four-stroke engine according to claim 6 wherein said engine is a diesel engine.

## Patentansprüche

1. Verfahren zur Herstellung eines Kolbens aus einer hypereutektischen Al-Si-Legierung mit der folgenden Zusammensetzung
| Element | Gew.-% |
|---|---|
| Si | 16-24, vorzugsweise 18-22 |
| Fe | ≤ 0,4 |
| Cu | 0,5 - 2,0 |
| Mn | < 0,15 |
| Mg | < 1,50 |
| Zn | < 0,10 |
| Ti | < 0,10 |
| Ni | 0,5 - 2,0 |
| P | < 0,015 |
| Sonstige Elemente | < 0,05 jeweils |
| | < 0,15 insgesamt |
| Al | bis zu 100 % |
sowie mindestens einen Alfin-Ring aus Ni-Resist-Gusseisen mit der folgenden Zusammensetzung:
| | % |
|---|---|
| C | max. 3 |
| Si | 1,0 - 2,8 |
| Mn | 0,5 - 1,5 |
| Ni | 13,5 - 17,5 |
| P | max. 0,25 |
| Cr | 1,0 - 3,5 |
| Cu | 5,5 - 7,5 |
| Fe | bis zu 100 % |
wobei das Verfahren die folgenden Schritte umfasst:
(i) Bereitstellen mindestens eines Gusseisenrings;
(ii) Eintauchen des mindestens einen Gusseisenrings in mindestens ein Aluminiumbeschichtungsbad, das eine Al-Si-Legierung mit 8-12 Gew.-% Si enthält, bei einer Temperatur von 650 °C bis 750 °C, vorzugsweise bei einer Temperatur von 690 °C bis 730 °C;
(iii) Entnehmen des Gusseisenrings aus dem Aluminiumbeschichtungsbad und Einsetzen in eine Gussform;
(iv) Eingießen der hypereutektischen Al-Si-Legierung in die Form bei einer Gusstemperatur von 760 °C bis 900 °C, vorzugsweise 820 °C bis 870 °C, wodurch ein Kolben mit mindestens einem Alfin-Ring erhalten wird;
(v) Abkühlen und Entnehmen des Kolbens aus der Form.

2. Verfahren nach Anspruch 1, wobei das Aluminiumbeschichtungsbad eine Al-Si-Legierung umfasst, die 8,0-12,0 Gew.-% Si, vorzugsweise 10,0-11,5 Gew.-%, noch bevorzugter 10,0 Gew.-% enthält.

3. Verfahren nach einem der Ansprüche 1 bis 2, wobei das Aluminiumbeschichtungsbad eine Al-Si-Legierung umfasst, die Fe und Cu als Legierungselemente in einer Gesamtmenge von < 4 Gew.-%, vorzugsweise < 3 Gew.-%, noch bevorzugter < 1 Gew.-%, enthält.

4. Kolben aus einer hypereutektischen Al-Si-Legierung, der mindestens einen Alfin-Ring aus Ni-Resist-Gusseisen mit der folgenden Zusammensetzung umfasst
| | & |
|---|---|
| C | max. 3 |
| Si | 10-28 |
| Mn | 0,5-1,5 |
| Ni | 13,5-17,5 |
| P | max. 0,25 |
| Cr | 10-35 |
| Cu | 55-75 |
| Fe | bis zu 100 % |
der durch das Verfahren gemäß einem der Ansprüche 1 bis 3 hergestellt wurde, wobei die hypereutektische Al-Si-Legierung Folgendes umfasst:
| Element | Gew.-% |
|---|---|
| Si | 16-24, vorzugsweise 18-22 |
| Fe | ≤ 0,4 |
| Cu | 0,5 - 2,0 |
| Mn | < 0,15 |
| Mg | < 1,50 |
| Zn | < 0,10 |
| Ti | < 0,10 |
| Ni | 0,5 - 2,0 |
| P | < 0,015 |
| Sonstige Elemente | < 0,05 jeweils |
| | < 0,15 insgesamt |
| Al | bis zu 100 % |
und bei denen der Anteil der Kolben, bei denen die Ablösung der Oberfläche mindestens eines Rings mehr als 4 % der gesamten Kontaktfläche zwischen dem Ring und dem Kolbenkörper beträgt, höchstens etwa 30 % beträgt, wobei die Ablösung der Oberfläche des mindestens einen Rings mittels eines Ultraschallanalyseverfahrens gemessen wird.

5. Kolben nach einem der Ansprüche 4, der 1 bis 3 Alfin-Ringe umfasst, vorzugsweise 1.

6. Zweitakt- oder Viertaktmotor, der mindestens einen Kolben aus einer hypereutektischen Al-Si-Legierung nach einem der Ansprüche 4 bis 5 umfasst.

7. Zweitakt- oder Viertaktmotor nach Anspruch 6, wobei es sich bei dem Motor um einen Dieselmotor handelt.

## Revendications

1. Procédé de fabrication d'un piston en alliage Al-Si hypereutectique présentant la composition suivante :
| Élément | % en poids |
|---|---|
| Si | 16-24, de préférence 18-22 |
| Fe | ≤ 0,4 |
| Cu | 0,5 - 2,0 |
| Mn | < 0,15 |
| Mg | < 1,50 |
| Zn | < 0,10 |
| Ti | < 0,10 |
| Ni | 0,5 - 2,0 |
| P | < 0,015 |
| autres | < 0,05 chacun |
| éléments | < 0,15 au total |
| Al | jusqu'à 100 % |
et au moins un anneau Alfin en fonte Ni-Resist présentant la composition suivante :
| | % |
|---|---|
| C | max. 3 |
| Si | 1,0 - 2,8 |
| Mn | 0,5 - 1,5 |
| Ni | 13,5 - 17,5 |
| P | max. 0,25 |
| Cr | 1,0 - 3,5 |
| Cu | 5,5 - 7,5 |
| Fe | jusqu'à 100 % |
ledit procédé comprenant les étapes suivantes :
fournir au moins un anneau en fonte ;
tremper ledit au moins un anneau en fonte dans au moins un bain de placage d'aluminium comprenant un alliage Al-Si contenant 8 à 12 % en poids de Si, à une température comprise entre 650 °C et 750 °C, de préférence entre 690 °C et 730 °C ;
extraire l'anneau en fonte du bain de placage d'aluminium et l'insérer dans un moule de coulée ;
couler l'alliage Al-Si hypereutectique dans le moule, à une température de coulée comprise entre 760 °C et 900 °C, de préférence entre 820 °C et 870 °C, obtenant ainsi un piston comprenant au moins un anneau Alfin ;
refroidir et extraire le piston du moule.

2. Procédé selon la revendication 1, dans lequel le bain de placage d'aluminium comprend un alliage Al-Si contenant 8,0 à 12,0 % en poids de Si, de préférence 10,0 à 11,5 % en poids, et plus préférablement 10,0 % en poids.

3. Procédé selon l'une quelconque des revendications 1 à 2, dans lequel le bain de placage d'aluminium comprend un alliage Al-Si contenant du Fe et du Cu comme éléments d'alliage en une quantité totale inférieure à 4 % en poids, de préférence inférieure à 3 % en poids, et plus préférablement inférieure à 1 % en poids.

4. Piston constitué d'un alliage Al-Si hypereutectique comprenant au moins un segment Alfin en fonte Ni-Resist ayant la composition suivante
| | & |
|---|---|
| C | max. 3 |
| Si | 10-28 |
| Mn | 0,5-1,5 |
| Ni | 13,5-17,5 |
| P | max. 0,25 |
| Cr | 10-35 |
| Cu | 55-75 |
| Fe | jusqu'à 100 % |
obtenu par le procédé selon l'une quelconque des revendications 1 à 3, dans lequel l'alliage Al-Si hypereutectique comprend
| Élément | % en poids |
|---|---|
| Si | 16-24, de préférence 18-22 |
| Fe | ≤ 0,4 |
| Cu | 0,5 - 2,0 |
| Mn | < 0,15 |
| Mg | < 1,50 |
| Zn | < 0,10 |
| Ti | < 0,10 |
| Ni | 0,5 - 2,0 |
| P | < 0,015 |
| autres éléments | < 0,05 chacun |
| | < 0,15 au total |
| Al | jusqu'à 100 % |
et les pistons présentant des détachements de la surface d'au moins un segment supérieurs à 4 % par rapport à la surface de contact totale entre le segment et le corps du piston sont inférieurs ou égaux à environ 30 %, le détachement de la surface dudit au moins un segment étant mesuré par une méthode d'analyse par ultrasons.

5. Piston selon l'une quelconque des revendications 4, comprenant 1 à 3 segments Alfin, de préférence 1.

6. Moteur à deux temps ou à quatre temps comprenant au moins un piston réalisé en un alliage Al-Si hypereutectique selon l'une quelconque des revendications 4 à 5.

7. Moteur à deux temps ou à quatre temps selon la revendication 6, dans lequel ledit moteur est un moteur diesel.
